# EUROPÄISCHE PATENTSCHRIFT

(11) **EP 3 384 732 B1**
(45) Veröffentlichungstag und Bekanntmachung des Hinweises auf die Patenterteilung: **08.04.2020**
(21) Anmeldenummer: 16804708.2
(22) Anmeldetag: 18.11.2016
(51) Int. Cl.: H05B 33/08, H02M 3/335

(54) **LLC-TREIBERSCHALTUNG MIT DÄMPFUNGSGLIED**
LLC DRIVER CIRCUIT WITH DAMPING ELEMENT
CIRCUIT D'ATTAQUE LLC MUNI D'UN ÉLÉMENT D'ATTÉNUATION

(30) Priorität: 30.11.2015 DE 102015223738
(43) Veröffentlichungstag der Anmeldung: 10.10.2018
(73) Patentinhaber: Tridonic GmbH & Co KG, 6851 Dornbirn (AT)
(72) Erfinder: STARK, Stefan, 6922 Wolfurt (AT); LANZA, Benjamin, 6971 Hard (AT)
(74) Vertreter: Rupp, Christian
(86) Internationale Anmeldenummer: PCT/EP2016/078170
(87) Internationale Veröffentlichungsnummer: WO 2017/093049

(56) Entgegenhaltungen:
- WO-A1-2004/073132
- WO-A2-2014/060899
- AT-U1- 13 829
- US-A- 5 796 216
- US-A1- 2012 127 762
- US-A1- 2012 248 998
- PHILIP C TODD: "Snubber Circuits: Theory, Design and Application", INTERNET CITATION, 31. Mai 1993 (1993-05-31), XP002447016, Gefunden im Internet: URL:http://focus.ti.com/lit/an/slup100/slu p100.pdf [gefunden am 2007-08-16]

## Beschreibung

Die Erfindung bezieht sich auf eine Treiberschaltung für den Betrieb wenigstens eines Leuchtmittels, insbesondere wenigstens einer LED, auf eine Leuchte oder auf ein Betriebsgerät mit einer solchen Treiberschaltung sowie auf ein Verfahren zum Betrieb der Treiberschaltung.

Aus dem Stand der Technik sind Treiberschaltungen zum Betreiben von Leuchtmitteln, insbesondere von LEDs, grundsätzlich bekannt. Eine bekannte Treiberschaltung wird dabei von einer elektrischen Versorgung aus versorgt, z.B. von einer Wechselspannung und insbesondere einer Netzspannung, und umfasst eine getaktete Schaltung und einen Resonanzkreis, der bspw. Teil einer LLC-Schaltung ist. Ein Übertrager ist vorgesehen, um elektrische Energie über eine galvanische Barriere hinweg zu übertragen, von einer Primärseite des Übertragers bzw. der Treiberschaltung auf eine Sekundärseite des Übertragers bzw. der Treiberschaltung. Die galvanische Barriere teilt also im Wesentlichen die Treiberschaltung in eine ausgehend von der elektrischen Versorgung versorgte Primärseite und in eine ausgehend von der Sekundärseite des Übertragers versorgte Sekundärseite. Ziel der Energieübertragung ist typischerweise die Versorgung des Leuchtmittels auf der Sekundärseite, insbesondere mit einem Betriebsstrom. Die LLC-Schaltung weist vorzugsweise zwei Wicklungen/Spulen auf, von denen eine als Primärwicklung des Übertragers, im Folgenden auch LLC-Übertrager genannt, fungiert.

Bei derartigen Topologien kann der Fall eintreten, dass, insbesondere wenn die getaktete Schaltung als Halbbrückenwechselrichter ausgestaltet ist, ein Schalter des Wechselrichters leitend ist, während wenigstens eine mit der Sekundärwicklung verbundene wenigstens eine Diode bereits nicht mehr leitet. So kann es zu hochfrequenten Schwingungsvorgängen kommen (im Megahertzbereich), die durch eine Kombination der Kapazität der wenigstens einen Diode und der Streuinduktivität bzw. Resonanzinduktivität der LLC-Topologie verursacht wird, die dann zusammen einen Schwingkreis bilden. Diese hochfrequenten Schwingungen wirken sich insbesondere nachteilig auf das elektromagnetische Interferenzverhalten (EMV/EMI-Verhalten) der Treiberschaltung aus.

AT 13 829 U1 offenbart ein Betriebsgerät zur Ansteuerung einer LED-Strecke mit sekundärseitiger Steuereinheit.

US 5 796 216 A offenbart eine elektronische Zündungsverstärkungsschaltung, die sowohl Grundschwingungs- als auch Ober schwingungsresonanzkreise, sowie einen Gleichstrom-Offset aufweist.

WO 2014/060899 A2 offenbart ein Treibergerät sowie - verfahren zum Betreiben einer Last.

Die Erfindung macht es sich somit zur Aufgabe, eine Lösung bereitzustellen, die es erlaubt, die Schwingungen zu reduzieren und somit das elektromagnetische Interferenzverhalten zu verbessern.

Die oben genannte Aufgabe wird durch die Erfindung, definiert durch die unabhängigen Ansprüche, gelöst.

Dabei wird der Resonanzkreis bzw. die Treiberschaltung vorzugsweise als Konstantstromkonverter betrieben. Ein Regelkreis kann zur Regelung des Leuchtmittelstroms vorgesehen sein, wobei ein Ist-Wert des Leuchtmittelstroms auf der Sekundärseite der galvanisch isolierenden Barriere erfasst werden kann. Diese sekundärseitige Messung des Ist-Werts kann dann auf die Primärseite über die galvanisch isolierende Barriere hinweg übertragen werden, da vorzugsweise auf der Primärseite eine Steuereinheit angeordnet ist, die auch eine getaktete Ansteuerung der getakteten primärseitigen Schaltung durchführen kann, um den Ist-Wert einem Sollwert anzunähern. Selbstverständlich kann die Steuereinheit auch sekundärseitig angeordnet sein. Eine entsprechende Übertagung von Stellgrößen auf die Primärseite erfolgt dann über die galvanisch isolierende Barriere hinweg (z.B. durch Optokoppler).

Zur Lösung des Problems stellt die Erfindung somit eine Treiberschaltung und ein Verfahren zum Betrieb einer Treiberschaltung gemäß der unabhängigen Ansprüche bereit. Weiterbildungen der Erfindung sind Gegenstand der abhängigen Ansprüche.

In einem ersten Aspekt wird eine Treiberschaltung für Leuchtmittel, insbesondere für eine oder mehrere LEDs, bereitgestellt, aufweisend eine mit Spannung versorgbare und mittels mindestens zwei Schaltern getaktete Schaltung, einen ausgehend von der getakteten Schaltung versorgten Resonanzkreis aufweisend einen Übertrager zum Übertragen einer Spannung von einer Primärwicklung des Übertragers zu einer Sekundärwicklung des Übertragers, wobei Anschlüsse zur Versorgung der Leuchtmittel ausgehend von der Sekundärwicklung versorgt sind, wobei an dem Übertrager ein Erfassungskreis mit einer Erfassungswicklung vorgesehen ist, die vorzugsweise mit der Primärwicklung magnetisch gekoppelt ist, und wobei der Erfassungskreis ein Dämpfungsglied aufweist, das dazu eingerichtet ist, indirekt den Resonanzkreis zu bedämpfen. Die Treiberschaltung weist eine Steuereinheit auf, die dazu eingerichtet ist, an einem Mittenpunkt eines Spannungsteilers des Erfassungskreises eine Messspannung zu erfassen. Die Steuereinheit erfasst eine weitere Messspannung und diskriminiert bezüglich wenigstens eines hinterlegten Schwellenwerts und aktiviert oder deaktiviert das Dämpfungsglied abhängig von der Diskriminierung.

Die Steuereinheit erfasst eine Mittenpunktspannung an der getakteten Schaltung und aktiviert das Dämpfungsglied, wenn die weitere erfasste Messspannung den wenigstens einen hinterlegten Schwellenwert unterschreitet, und die Mittenpunktspannung einem Hochpegel entspricht, insbesondere der Spannung, wodurch erfasst wird, ob der wenigstens eine Schalter geschlossen ist.

Das Dämpfungsglied kann als eine Serienschaltung eines Dämpfungskondensators und eines Dämpfungswiderstands ausgestaltet sein.

Das Dämpfungsglied kann ein Schalterelement aufweisen, das vorzugsweise in Serie mit einem zweiten Dämpfungswiderstand verbunden ist.

Parallel zu der Erfassungswicklung kann ein Glättungskondensator verbunden sein.

Zwischen dem Dämpfungsglied und dem Glättungskondensator kann eine Diode verbunden sein.

Parallel zu der Erfassungswicklung kann ein Spannungsteiler verbunden sein.

Die Steuereinheit kann das Schalterelement ansteuern und durch die Ansteuerung kann das Schalterelement aktiviert oder deaktiviert werden.

Die Steuereinheit kann die Mittenpunktspannung an der getakteten Schaltung und die weitere erfasste Messspannung erfassen und das Dämpfungsglied aktivieren, wenn die weitere erfasste Messspannung einen weiteren Schwellenwert überschreitet, und die Mittenpunktspannung einem Niedrigpegel entspricht, insbesondere einem Erdungspotential.

Das Dämpfungsglied kann parallel zu der Erfassungswicklung verbunden sein.

Das Dämpfungsglied kann eine Amplitude der übertragenen Spannung dämpfen.

Zwischen der Sekundärwicklung und den Anschlüssen zur Versorgung der Leuchtmittel kann wenigstens eine Diode vorgesehen sein, die insbesondere einen von der Sekundärwicklung ausgegebenen Strom gleichrichtet.

Die Primärwicklung kann Bestandteil des primärseitigen Resonanzkreises sein, und/oder der Resonanzkreis kann als LLC-Resonanzkreis ausgestaltet sein.

Die getaktete Schaltung kann von einer DC-Spannung versorgt werden. Die getaktete Schaltung kann ein Wechselrichter sein, insbesondere ein Halbbrückenwechselrichter.

In noch einem weiteren Aspekt wird ein Verfahren zum Betrieb einer Treiberschaltung für Leuchtmittel, insbesondere für eine oder mehrere LEDs, bereitgestellt, wobei eine mit Spannung eine mittels mindestens zwei Schaltern getakteten Schaltung versorgt, ausgehend von der getakteten Schaltung ein Resonanzkreis aufweisend einen Übertrager versorgt wird, der Übertrager eine Spannung von einer Primärwicklung des Übertragers zu einer Sekundärwicklung des Übertragers überträgt, wobei Anschlüsse zur Versorgung der Leuchtmittel ausgehend von der Sekundärwicklung versorgt werden, wobei an dem Übertrager ein Erfassungskreis mit einer Erfassungswicklung vorgesehen ist, die vorzugsweise mit der Primärwicklung magnetisch gekoppelt ist, wobei der Erfassungskreis ein Dämpfungsglied aufweist, das indirekt den Resonanzkreis bedämpft.
Die Treiberschaltung weist eine Steuereinheit auf, die dazu eingerichtet ist, an einem Mittenpunkt eines Spannungsteilers des Erfassungskreises eine Messspannung zu erfassen. Die Steuereinheit erfasst eine weitere Messspannung und diskriminiert bezüglich wenigstens eines hinterlegten Schwellenwerts und aktiviert oder deaktiviert das Dämpfungsglied abhängig von der Diskriminierung. Die Steuereinheit erfasst eine Mittenpunktspannung an der getakteten Schaltung und aktiviert das Dämpfungsglied, wenn die weitere erfasste Messspannung den wenigstens einen hinterlegten Schwellenwert unterschreitet, und die Mittenpunktspannung einem Hochpegel entspricht, insbesondere der Spannung, wodurch erfasst wird, ob der wenigstens eine Schalter geschlossen ist.

Die Primärwicklung kann Bestandteil des primärseitigen Resonanzkreises sein, und/oder der Resonanzkreis kann als LLC-Resonanzkreis ausgestaltet sein.

Die getaktete Schaltung kann von einer DC-Spannung versorgt werden. Die getaktete Schaltung kann ein Wechselrichter sein, insbesondere ein Halbbrückenwechselrichter.

Die Erfindung wird nunmehr auch mit Blick auf die Figuren beschrieben. Dabei zeigen:
- Fig. 1: ein exemplarisches Blockschaltbild einer Treiberschaltung,
- Fig. 2: eine exemplarische Ausgestaltung einer Schaltungsanordnung,
- Fig. 3: exemplarische Spannungsverläufe,
- Fig. 4: eine exemplarische Ausgestaltung eines Erfassungskreises,
- Fig. 5: exemplarische gedämpfte Spannungsverläufe,
- Fig. 6: eine exemplarische weitere Ausgestaltung eines Erfassungskreises, und
- Fig. 7a: schematische Signalverläufe zum Schalten
- und b: eines Schalterelements.

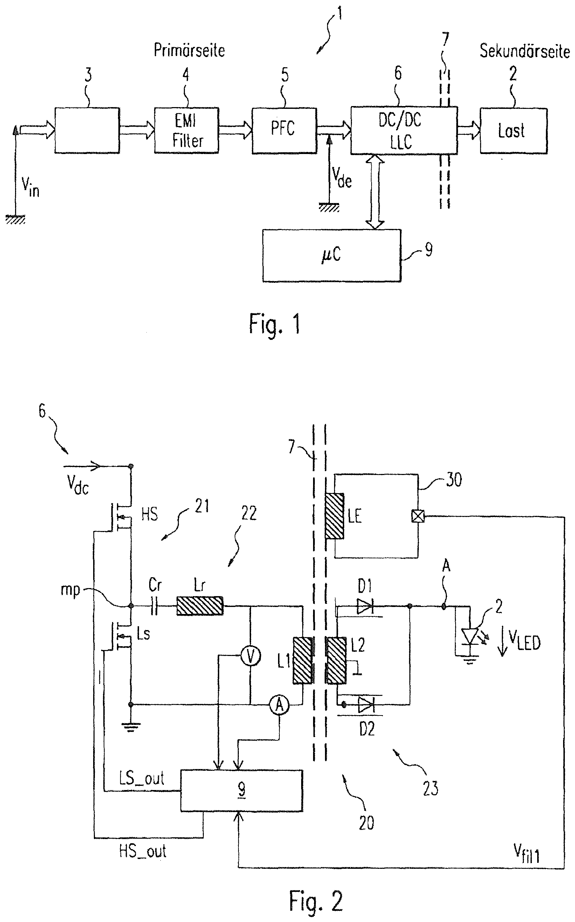

Fig. 1 zeigt schematisch den Aufbau einer erfindungsgemäßen Treiberschaltung, von der ausgehend Leuchtmittel, insbesondere eine LED oder eine LED-Strecke, versorgbar sind. Die Leuchtmittel sind in dem exemplarischen Aufbau als Last 2 dargestellt. Die Treiberschaltung wird vorzugsweise von einer Eingangsspannung Vᵢₙ, z.B. einer Wechselspannung oder einer Netzspannung, gespeist. Die Eingangsspannung Vin wird eingangsseitig vorzugsweise einem Gleichrichter 3 und einem nachgeordneten elektromagnetischen Interferenzfilter 4 (EMI-Filter) zugeführt, das elektromagnetische Störungen filtert. Die gleichgerichtete und ggf. gefilterte Spannung kann dann einer Leistungsfaktorkorrekturschaltung (PFC) 5 zugeführt werden, die ausgangsseitig eine Versorgungsspannung V_{dc} erzeugt. Diese Versorgungsspannung wird als DC-Spannung (bzw. gleichgerichtete AC-Spannung) als näherungsweise konstante Busspannung mit möglicherweise einer Restwelligkeit ausgegeben. Die Versorgungsspannung V_{dc} kann z.B. 300 bis 500 V, vorzugsweise 400 V, betragen. Alternativ kann die Versorgungsspannung V_{dc} auch als Gleichspannung bzw. konstante Spannung und insbesondere als Batteriespannung ausgehend von einem Energiespeicher (Batterie, Akkumulator, ...) ausgegeben werden. In diesem Fall kann auf den Gleichrichter 3, das Filter 4 und/oder die Leistungsfaktorkorrekturschaltung 5 verzichtet werden. Eine Speisung mit einer Wechselspannung Vin erfolgt dann nicht.

Die Versorgungsspannung V_{dc} versorgt weiter einen Wandler 6, der insbesondere als DC/DC-Wandler ausgebildet ist. Der getaktete DC/DC-Wandler 6 umfasst dabei einen Resonanzkreis und insbesondere einen LLC-Konverter aufweisend einen Übertrager, der dazu dient, eine elektrische Größe über eine galvanisch isolierende Barriere 7 hinweg von einer Primärseite der Treiberschaltung auf eine Sekundärseite der Treiberschaltung zu übertragen. Der Wandler 6 wird dabei vorzugsweise von einer primärseitigen Steuereinheit 9 gesteuert bzw. geregelt. In Fig. 2 sind exemplarisch Strom- und Spannungsmessvorrichtungen gezeigt, die zur Erfassung von zur Regelung/Steuerung verwendeten Parametern verwendet werden können.

Der Wandler 6 ist nun detaillierter in Fig. 2 mit der Last 2, hier einer LED, dargestellt. Die galvanisch isolierende Barriere 7, die insbesondere als SELV-Barriere (Sicherheitskleinspannungsbarriere) ausgebildet ist, kann mittels eines Übertragers 20 überwunden werden, indem eine primärseitige Primärwicklung L1 elektromagnetisch gekoppelt mit einer sekundärseitigen Sekundärwicklung L2 gekoppelt ist. Der Übertrager 20 kann als Transformator ausgestaltet sein.

Der Übertrager 20 kann auch an den Wandler 6 angeschlossen und als separates Bauteil ausgebildet sein. Insbesondere wird als elektrische Größe eine Spannung oder ein Strom von der Primärseite der galvanisch isolierenden Barriere auf die Sekundärseite der galvanisch isolierenden Barriere übertragen.

In Fig. 2 ist weiter die getaktete Schaltung 21 gezeigt, die als ein Wechselrichter in Form einer Halbbrückenschaltung ausgebildet ist. Die getaktete Schaltung 21 ist von der Versorgungsspannung V_{dc} versorgt und weist vorzugsweise einen potentialniedrigeren Schalter LS und einen potentialhöheren Schalter HS auf. Dabei ist zu verstehen, dass die getaktete Schaltung 21 zumindest einen Schalter aufweist. Als Wechselrichter mit nur einem Schalter kann bspw. ein Flyback-Wandler zum Einsatz kommen.

Die Schalter LS, HS der getakteten Schaltung 21 können als Transistoren, z.B. FET- oder MOSFET, ausgestaltet sein. Die Schalter LS, HS können durch Steuersignale, die von der Steuereinheit 9 ausgegeben werden, gesteuert werden. Der potentialniedrigere Schalter LS ist mit einer primärseitigen Masse verbunden. Am potentialhöheren Schalter HS der getakteten Schaltung 21 liegt dagegen die Eingangsspannung V_{dc} an.

Am Mittenpunkt mp der getakteten Schaltung 21, d.h. zwischen den beiden Schaltern LS, HS, ist ein Resonanzkreis 22 in Form eines Serienresonanzkreises angeschlossen, bestehend aus einem Resonanzkondensator Cr und einer Resonanzinduktivität Lr. Zusätzlich ist in dem Resonanzkreis die Primärwicklung L1 vorgesehen. Alternativ kann erfindungsgemäß auch ein Parallelresonanzkreis am Mittenpunkt mp der getakteten Schaltung 21 verbunden sein. Der Resonanzkreis 22 ist zwischen der primärseitigen Masse und dem Mittenpunkt mp der Halbbrückenschaltung verbunden. Der Resonanzkreis 22 wird in diesem Fall als LLC-Resonanzkreis bezeichnet. Der Resonanzkondensator Cr und die Resonanzinduktivität Lr bilden vorzugsweise einen LC-Resonanzkreis.

Die Primärwicklung L1 ist vorzugsweise die Primärwicklung eines Transformators. Der in Fig. 2 gezeigte Übertrager 20 umfasst die Primärwicklung L1, also die Primärwicklung L1 des LLC-Resonanzkreises, und die mit dieser Primärwicklung L1 elektromagnetisch gekoppelte Sekundärwicklung L2. Durch die transformatorische Kopplung zwischen der Primärwicklung L1 und der Sekundärwicklung L2 erfolgt eine Energieübertragung über die galvanische Barriere 7 hinweg, wenn der Transformator entsprechend angesteuert ist, insbesondere durch Steuerung der Taktung der Schalter HS, LS durch die Steuereinheit 9. Der Übertrager 20 kann zusätzlich auch eine Streuinduktivität und eine Hauptinduktivität aufweisen (nicht gezeigt). Die Streuinduktivität kann in Serie zu der Wicklung L1 vorgesehen sein. Die Hauptinduktivität kann zum Führen des Magnetisierungsstroms dienen und vorzugsweise parallel zur Primärwicklung L1 angeordnet sein. Die Hauptinduktivität kann einen Teil des Resonanzkreises 22 bilden. Die Resonanzinduktivität Lr kann beispielsweise durch die Streuinduktivität des Transformators gebildet werden oder als separates Bauteil vorhanden sein.

Durch die Sekundärwicklung L2 des Übertragers 20 fließt im Betrieb vorzugsweise ein Wechselstrom (AC-Strom). Die Spannung der Sekundärwicklung L2 wird anschließend vorzugsweise einem Gleichrichter 23 zugeführt, der im dargestellten Beispiel durch die Dioden D1 und D2 gebildet wird. Die Sekundärwicklung L2 des Übertragers 20 weist zusätzlich eine Anzapfung bzw. Abzapfung auf, die insbesondere als Mittenpunkt-Abzapfung vorgesehen sein kann. Diese Mittenpunkt-Abzapfung bildet ein Potential des Gleichrichters 23 bzw. ein Potential der an der Last 2 anliegenden Spannung V_{LED} ab.

Eine Seite der Sekundärwicklung L2 ist dabei mit einer Anode der ersten Diode D1 verbunden, während die andere Seite der Sekundärwicklung L2 mit der Anode der zweiten Diode D2 verbunden ist. Die jeweiligen Katoden der Dioden D1, D2 sind zusammengeführt und bilden ein Ausgangspotential des Gleichrichters 23. Der Gleichrichter 23 kann ausgangsseitig mit einem Speicher- oder Filterkondensator gekoppelt sein (nicht gezeigt). Als Speicherkondensator kann insbesondere ein Elektrolytkondensator (ELKO) eingesetzt werden.

Um eine von dem Gleichrichter 23 ausgegebene Spannung zu filtern und insbesondere eine Rippelfilterung bereitzustellen, kann dem Kondensator eine Induktivität nachgeschaltet sein, die wiederum mit einem weiteren Kondensator verbunden sein kann. An den Gleichrichter ist dann an wenigstens einem Anschluss A die Last 2 angeschlossen. Es können auch mehr Anschlüsse zur Verbindung des wenigstens einen Leuchtmittels vorgesehen sein.

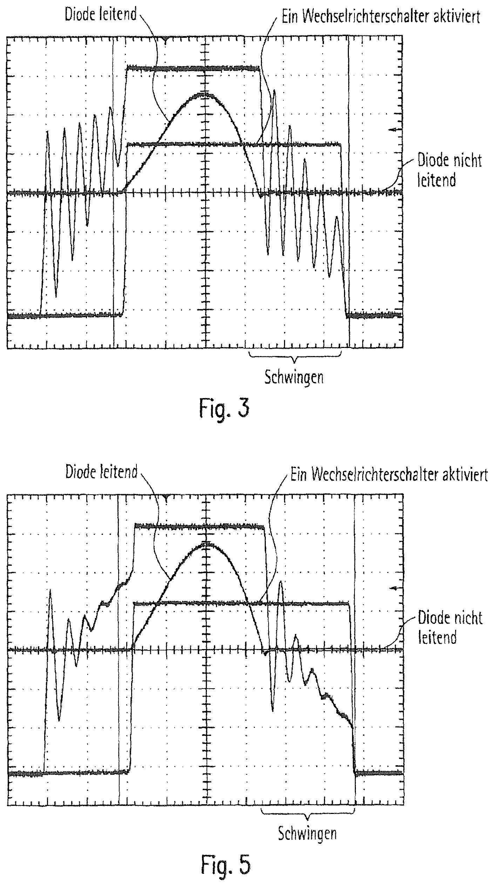

Ist nun einer der Schalter LS, HS der getakteten Schaltung 21 leitend, während die wenigstens eine sekundärseitige Diode D1/D2 bereits nicht mehr leitet, beginnen die Kapazität der Sekundärwicklung L2 und die Kapazität der wenigstens einen Diode D1/D2 in Verbindung mit der Resonanzinduktivität Lr des Resonanzkreises 22, und insbesondere des LLC-Resonanzkreises, zu schwingen bzw. zu oszillieren. Dies ist in Fig. 3 gezeigt.

Das Schwingen tritt dann auf, wenn beispielsweise die Taktfrequenz eines Halbbrückenwechselrichters 21 kleiner ist als die Resonanzfrequenz des Resonanzkreises 22. Dabei treten die größten Schwingungen bei der höchsten Ausgangsspannung auf, da bei der höchsten Ausgangsspannung die kleinste Verstärkung (gain) bzw. die geringste Frequenz benötigt wird. Die Schwingfrequenz und ihre Harmonischen sind beispielsweise in dem CISPR15-Spektrum sichtbar und beeinträchtigen somit das EMI-Verhalten.

Wieder mit Bezug auf Fig. 2 ist dort ein Erfassungskreis 30 gezeigt, der im Folgenden genauer beschrieben wird. Der Erfassungskreis 30 ist an dem Übertrager 20 bzw. dem Wandler 6 vorgesehen. Der Erfassungskreis 30 weist eine Erfassungswicklung LE auf, die insbesondere mit der Primärwicklung L1 des Übertragers 20 elektromagnetisch gekoppelt ist. Der Erfassungskreis 30 dient insbesondere zur Erfassung der übertragenen Spannung durch die Steuereinheit 9. Dazu kann von der Steuereinheit 9 eine Spannung V_{fil1} erfasst werden, die einen die Spannung an der Primärwicklung L1 wiedergebenden Parameter darstellt. Vorzugsweise wird der Spitzenwert der an der Primärwicklung L1 anliegenden Spannung erfasst. Der Erfassungskreis 30 ist vorzugsweise auf der Primärseite des Wandlers 6 angeordnet bzw. auf dem gleichen Potential wie die Steuereinheit 9 angeordnet, um eine einfache Erfassung der Signale mittels des Erfassungskreises 30 durch die Steuereinheit 9 zu ermöglichen.

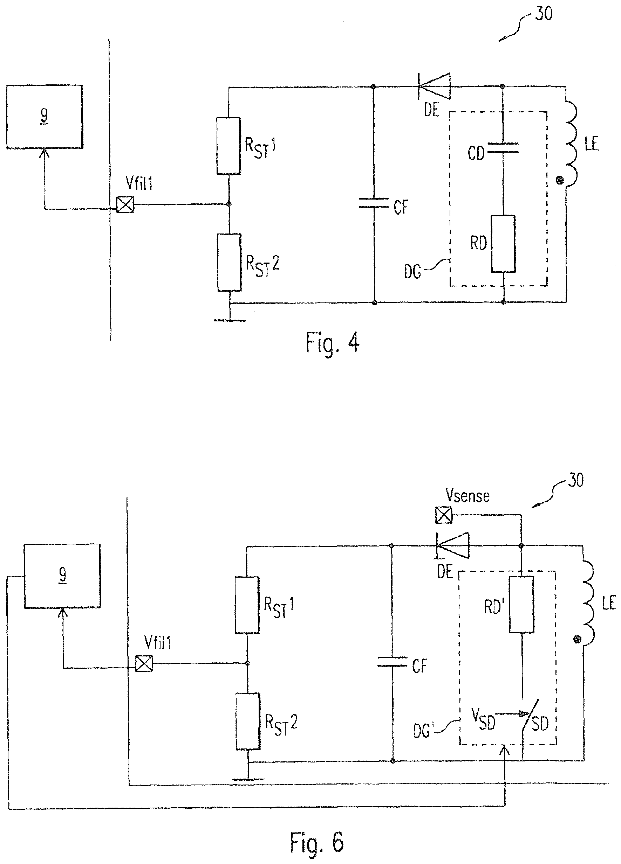

Der Erfassungskreis 30 wird nun zunächst mit Blick auf Fig. 4 beschrieben. Der Erfassungskreis 30 umfasst die Erfassungswicklung LE und einen Glättungskondensator CF. Zwischen der Erfassungswicklung LE und dem Glättungskondensator CF kann weiter eine Diode DE des Erfassungskreises vorgesehen sein.

Parallel zu dem Glättungskondensator CF ist ein Spannungsteiler mit einem ersten Widerstand R_{ST}1 und einem zweiten Widerstand R_{ST}2 vorgesehen. An seiner potentialniedrigeren Seite ist der zweite Widerstand R_{ST}2 mit einem Erdungspotential verbunden, während er andererseits mit der potentialniedrigeren Seite des ersten Widerstands R_{ST}1 verbunden ist.

An einem Mittenpunkt des Spannungsteilers R_{ST}1, R_{ST}2 kann ein Messpunkt verbunden sein. An dem Messpunkt kann die Steuereinheit 9 die Spannung V_{fil1} erfassen. Insbesondere ist der Glättungskondensator CF mit dem Spannungsteiler R_{ST}1, R_{ST}2 parallel geschaltet. Die zwischen die Erfassungswicklung LE und den Glättungskondensator CF geschaltete Diode DE dient dazu, dass an dem Messpunkt lediglich eine Spitzenspannung erfasst wird, insbesondere die mittels Erfassungswicklung LE erfasste Spitzenspannung der Primärwicklung L1 bzw. die Spitzenspannung der Sekundärwicklung L2. Beispielsweise kann somit auch die an der Last 2 anliegende Spannung V_{LED} erfasst werden. Bei der Erfassung der Spannung mittels der Erfassungswicklung LE ist in Kenntnis des Wicklungsverhältnisses des Transformators ein Rückschluß auf die an der Primärwicklung L1 bzw. Sekundärwicklung L2 anliegende Spannung möglich. Durch die Diode DE ist einerseits eine Wahl der Polarität des zu erfassenden Spannungssignals möglich und zum anderen stellt die Diode DE sicher, dass nur der Spitzenwert erfasst wird.

Wie in Fig. 4 nun weiter gezeigt, ist zwischen dem Glättungskondensator CF und der Erfassungswicklung LE weiter ein Dämpfungsglied DG vorgesehen. Dieses ist vorzugsweise parallel zu der Erfassungswicklung LE verschaltet.

Insbesondere besteht das Dämpfungsglied aus einer Serienschaltung eines Dämpfungswiderstands RD und einem Dämpfungskondensator CD. Ist das Dämpfungsglied wie in Fig. 4 ausgestaltet (die Serienschaltung aus dem Dämpfungswiderstand RD und dem Dämpfungskondensator CD wird auch als "RC-Snubber" bezeichnet), so kann hierdurch ein Bedämpfen des Resonanzkreises 22 bzw. ein Dämpfen der Schwingungen erzielt werden. Der Resonanzkreises 22 wird "indirekt" bedämpft, da das Dämpfen durch elektromagnetische Kopplung mit dem Erfassungskreis 30 erfolgt und nicht "direkt" im Resonanzkreis oder an der Primärwicklung L1. Dabei wird insbesondere eine Amplitude der übertragenen Spannung gedämpft. Vorteilhaft ist diese Anordnung, da sie eine bessere Dämpfung ermöglicht, als wenn ein solcher RC-Snubber bzw. eine solche Serienschaltung von Dämpfungswiderstand RD und Dämpfungskondensator CD auf der Sekundärseite des Wandlers 6 bzw. des Übertragers 20 angebracht wäre.

Der Dämpfungskondensator CD ist vorgesehen, um eine AC-Kopplung zu erreichen, so dass der Dämpfungswiderstand RD nur dann wirksam wird, wenn die Schwingungen auftreten. Wird folglich ein Dämpfungsglied wie in Fig. 4 beschrieben, eingesetzt, so führt dies bereits zu einer signifikanten Reduzierung des Schwingens, wie dies in Fig. 5 dargestellt ist und aus einem Vergleich mit Fig. 3 im mit "Schwingen" bezeichneten Bereich deutlich wird.

Eine zweite Ausgestaltung des Erfassungskreises 30 ist in Fig. 6 dargestellt. Auch hier ist ein Dämpfungsglied DG' parallel zu der Erfassungswicklung LE verschaltet. Hierbei ist jedoch zu bemerken, dass ein zweiter Dämpfungswiderstand RD' in Serie mit einem Schalterelement SD verbunden ist. Mit dieser Anordnung kann nun selektiv das Dämpfungsglied DG' aktiviert bzw. deaktiviert werden. Eine Aktivierung des Dämpfungsglieds erfolgt insbesondere dann, wenn das Schalterelement SD leitend geschaltet ist, d.h. wenn der in der Fig. 6 exemplarisch dargestellte Schalter geschlossen ist. Dadurch wird ein RL-Glied aus der Erfassungswicklung LE und dem zweiten Dämpfungswiderstand RD' gebildet. Das Schalterelement SD kann insbesondere als FET, MOSFET oder Bipolartransistor ausgestaltet sein. Eine Deaktivierung des Dämpfungsglieds erfolgt dann, wenn das Schalterelement SD nicht leitend ist, wenn also der exemplarisch dargestellte Schalter in Fig. 6 geöffnet ist.

Eine Ansteuerung des Schalterelements SD erfolgt dabei vorzugsweise ausgehend von der Steuereinheit 9. In einem Speicher, der entweder in der Steuereinheit 9 integriert oder funktional mit der Steuereinheit 9 verbunden ist, so dass die Steuereinheit 9 auf den Speicherinhalt zugreifen kann, kann wenigstens ein Schwellenwert SW1 hinterlegt sein. Abhängig davon, welche Wert der Messspannung V_{fil1} an dem Messpunkt des Spannungsteilers R_{ST}1, R_{ST}2 erfasst wird, steuert dann die Steuereinheit 9 das Schalterelement SD an. Insbesondere kann die Steuereinheit 9 das Schalterelement SD dann aktivieren, wenn die Messspannung V_{fill} den Schwellenwert SW1 über- bzw. unterschreitet. Bei einem Überschreiten des Schwellenwerts kann die Steuereinheit 9 das Schalterelement SD ansteuern und somit das Dämpfungsglied aktivieren. Insbesondere wird dadurch der zweite Dämpfungswiderstand RD' zugeschaltet.

Genauer gesagt, ermittelt die Steuereinheit 9 die Zeit in bzw. den Zeitpunkt ab der die wenigstens eine Diode D1/D2 auf der Sekundärseite der Treiberschaltung nicht leitend ist. Diese Information wird dann dazu verwendet, den zweiten Dämpfungswiderstand RD' parallel zu der Erfassungswicklung LE zu schalten.

Um den Zeitpunkt zu ermitteln, in der die wenigstens eine Diode D1/D2 nicht mehr leitet, wird zunächst der Zeitpunkt bestimmt, an dem eine weitere Messspannung V_{Sense} unter den ersten Schwellenwert SW1 abfällt. Die weitere Messspannung V_{Sense} wird vorzugsweise an dem Dämpfungsglied DG' oder an der Erfassungswicklung LE und insbesondere von der Steuereinheit 9 erfasst. Dabei kann die weitere Messspannung V_{Sense} insbesondere vor der Diode DE des Erfassungskreises 30 erfasst werden, wodurch beide Polaritäten einer an der Erfassungswicklung LE induzierten Spannung erfasst werden können.

Der erste Schwellenwert SW1 ist vorzugsweise definiert durch V_{fil1} ^{∗} (R_{ST}1 + R_{ST}2) / R_{ST}2, wobei R_{ST}1 und R_{ST}2 hierbei die Widerstandswerte der Widerstände R_{ST}1, R_{ST}2 des Spannungsteilers widergeben und V_{fil1} den Wert der Messspannung an dem Messpunkt bezeichnet.

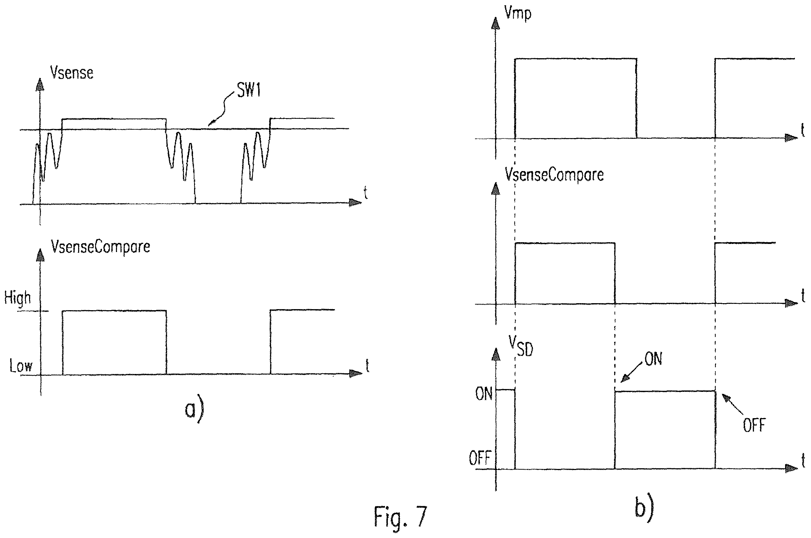

Wie in Fig. 7a) gezeigt, wird ein Vergleichssignal V_{SenseCompare} erzeugt. Das Signal weist einen Hochpegel auf, wenn die weitere Messspannung V_{Sense} den ersten Schwellenwert SW1 überschreitet. Der Hochpegel des Vergleichssignal V_{SenseCompare} endet, wenn die weitere Messspannung V_{Sense} den ersten Schwellenwert SW1 unterschreitet. Das Vergleichssignal V_{SenseCompare} wird dabei vorzugsweise von der Steuereinheit 9 erzeugt, auf Basis der Messspannungen V_{fil1} und V_{Sense}. Die Zeit, in der die wenigstens eine Diode D1/D2 nicht leitend ist, wird also durch das Auswerten der weitere Messspannung V_{Sense} und durch die Diskriminierung bzgl. des ersten Schwellenwerts SW1 bestimmt. Es wird also bestimmt, wann die weitere Messspannung V_{Sense} den ersten Schwellenwert SW1 über- und unterschreitet.

Die Steuereinheit 9 erfasst zudem die Mittenpunktspannung Vₘₚ an einem Mittenpunkt mp der getakteten Schaltung 21. Hiermit wird erfasst, ob ein Schalter LS, HS der getakteten Schaltung 21, bzw. des Wechselrichters 21 geschlossen ist. Alternativ können die Signale HS_out, LS_out, die von der Steuereinheit 9 zur Ansteuerung des potentialniedrigeren Schalters LS und des potentialhöheren Schalters HS dienen, abgegriffen werden.

In Fig. 7b) ist nun dargestellt, dass das Schalterelement SD des Dämpfungsglieds DG' angesteuert wird, wenn durch einen Vergleich der Signale Vₘₚ und V_{SenseCompare} erkannt wird, dass einerseits der Schwellenwert SW1 bereits unterschritten ist (was anzeigt, dass die wenigstens eine Diode D1/D2 als nicht mehr leitend angesehen wird) und andererseits die Mittenpunktspannung Vₘₚ anzeigt, dass noch einer der Schalter LS, HS der getakteten Schaltung 22 geschlossen ist. Das Schalterelement SD wird dann zu einem Zeitpunkt ON angesteuert, aktiviert/deaktiviert und insbesondere leitend geschaltet.

Steigt die weitere Messspannung V_{Sense} wieder über den ersten Schwellenwert SW1 so kann das Schalterelement SD erneut angesteuert werden, um es zu deaktivieren/aktivieren, insbesondere nicht leitend zu schalten. Dies kann zu einem weiteren Zeitpunkt OFF erfolgen.

Die Steuereinheit 9 kann insbesondere eine ASIC, IC, und/oder ein Mikrocontroller sein. Wenn das Schalterelement aktiviert ist und damit der zweite Dämpfungswiderstand RD' parallel zu der Erfassungswicklung LE geschaltet, erfolgt ein Bedämpfen des Resonanzkreises und insbesondere eine Dämpfung der Schwingungen.

Die in Figs. 7a) und 7b) bezeichneten Verläufe für die weitere Messspannung V_{Sense} und die Mittenpunktspannung Vₘₚ beziehen sich im Wesentlichen auf eine Ansteuerung des potentialhöheren Schalters HS. Ist der potentialhöhere Schalter HS geschlossen liegt am Mittenpunkt mp ein Hochpegel an, der im Wesentlichen der Spannung V_{dc} entspricht. Ist lediglich der potentialniedrigere Schalter LS geschlossen, wird der Mittenpunkt mp auf ein Referenzpotential gezogen, insbesondere auf ein Erdungspotential. Analog kann also selbstverständlich auch die Einschaltzeitdauer des potentialniedrigeren Schalters LS der getakteten Schaltung 22 erfasst werden. Auch eine Einschaltzeitdauer des potentialniedrigeren Schalters LS ist der Steuereinheit 9 im Wesentlichen bekannt, da sie den potentialniedrigeren Schalter LS mit dem Signal LS_OUT ansteuert.

Entsprechend kann dann bei Unterschreiten eines zweiten Schwellenwerts SW2, der z.B. dem negativen Wert des ersten Schwellenwerts SW1 entsprechen kann, das Vergleichssignal V_{SenseCompare} auf HIGH geschaltet werden, während bei einem Überschreiten des zweiten Schwellenwerts SW2 das Vergleichssignal V_{SenseCompare} auf LOW geschaltet wird. Ist das Vergleichssignal LOW, so wird das Schalterelement SD über das Signal V_{SD} angesteuert und das Dämpfungsglied DG' aktiviert, da dann der potentialniedrigere Schalters LS als geschlossen erkannt wird, während die wenigstens eine Diode D1/D2 als nicht leitend erkannt wird.

## Patentansprüche

1. Treiberschaltung (1) für Leuchtmittel, insbesondere für eine oder mehrere LEDs, aufweisend:
- eine mit Spannung (V_{dc}) versorgbare und mittels mindestens zwei Schaltern (LS, HS) getaktete Schaltung (21),
- einen ausgehend von der getakteten Schaltung (21) versorgten Resonanzkreis (22) aufweisend einen Übertrager (20) zum Übertragen einer Spannung von einer Primärwicklung (L1) des Übertragers (20) zu einer Sekundärwicklung (L2) des Übertragers (20),
wobei
Anschlüsse (A) zur Versorgung der Leuchtmittel ausgehend von der Sekundärwicklung (L2) versorgt sind,
- wobei an dem Übertrager (20) ein Erfassungskreis (30) mit einer Erfassungswicklung (LE) vorgesehen ist, die vorzugsweise mit der Primärwicklung (L1) magnetisch gekoppelt ist, wobei
der Erfassungskreis (30) ein Dämpfungsglied (DG) aufweist, das dazu eingerichtet ist, indirekt den Resonanzkreis (22) zu bedämpfen,
**dadurch gekennzeichnet,**
**dass** die Treiberschaltung (1) eine Steuereinheit (9) aufweist, die dazu eingerichtet ist, an einem Mittenpunkt eines Spannungsteilers (R_{ST}1, R_{ST}2) des Erfassungskreises (30) eine Messspannung (V_{fil1}) zu erfassen,
wobei die Steuereinheit (9) eine weitere Messspannung (V_{Sense}) erfasst und bezüglich wenigstens eines hinterlegten Schwellenwerts (SW1) diskriminiert und das Dämpfungsglied (DG) abhängig von der Diskriminierung aktiviert oder deaktiviert,
wobei die Steuereinheit (9) eine Mittenpunktspannung (Vₘₚ) an der getakteten Schaltung (21) erfasst und das Dämpfungsglied (DG) aktiviert, wenn die weitere erfasste Messspannung (V_{Sense}) den wenigstens einen hinterlegten Schwellenwert (SW1) unterschreitet, und
die Mittenpunktspannung (Vₘₚ) einem Hochpegel entspricht, insbesondere der Spannung (V_{dc}), wodurch erfasst wird, ob einer der mindestens zwei Schalter (LS, HS) geschlossen ist.

2. Treiberschaltung (1) nach Anspruch 1 oder 2,
wobei das Dämpfungsglied (DG) als eine Serienschaltung eines Dämpfungskondensators (CD) und eines Dämpfungswiderstands (RD) ausgestaltet ist.

3. Treiberschaltung (1) nach einem der vorgehenden Ansprüche,
wobei das Dämpfungsglied (DG) ein Schalterelement (SD) aufweist, das vorzugsweise in Serie mit einem zweiten Dämpfungswiderstand (RD') verbunden ist.

4. Treiberschaltung (1) nach einem der vorgehenden Ansprüche,
wobei der Erfassungskreis (30) einen Glättungskondensator (CF) aufweist, wobei parallel zu der Erfassungswicklung (LE) der Glättungskondensator (CF) verbunden ist.

5. Treiberschaltung (1) nach Anspruch 5,
wobei der Erfassungskreis (30) eine Diode (DE) aufweist, wobei zwischen dem Dämpfungsglied (DG) und dem Glättungskondensator (CF) die Diode (DE) verbunden ist.

6. Treiberschaltung (1) nach Anspruch 3,
wobei die Steuereinheit (9) das Schalterelement (SD) ansteuert und durch die Ansteuerung das Schalterelements (SD) das Dämpfungsglied (DG) aktiviert oder deaktiviert.

7. Treiberschaltung (1) nach einem der vorgehenden Ansprüche,
wobei das Dämpfungsglied (DG) parallel zu der Erfassungswicklung (LE) verbunden ist.

8. Treiberschaltung (1) nach einem der vorgehenden Ansprüche,
wobei die Treiberschaltung (1) zwischen der Sekundärwicklung (L2) und den Anschlüssen (A) zu Versorgung der Leuchtmittel wenigstens eine Diode (D1/D2) aufweist, die insbesondere einen von der Sekundärwicklung (L2) ausgegebenen Strom gleichrichtet.

9. Verfahren zum Betrieb einer Treiberschaltung (1) für Leuchtmittel, insbesondere für eine oder mehrere LEDs, wobei:
- eine Spannung (V_{dc}) eine mittels mindestens zwei Schaltern (LS, HS) getaktete Schaltung (21) versorgt, und wobei ausgehend von der getakteten Schaltung (21) ein Resonanzkreis (22) versorgt wird und der Resonanzkreis (22) einen Übertrager (20) aufweist, der Übertrager (20) eine Spannung von einer Primärwicklung (L1) des Übertragers (20) zu einer Sekundärwicklung (L2) des Übertragers (20) überträgt, wobei Anschlüsse (A) zur Versorgung der Leuchtmittel ausgehend von der Sekundärwicklung (L2) versorgt werden,
- wobei an dem Übertrager (20) ein Erfassungskreis (30) mit einer Erfassungswicklung (LE) vorgesehen ist, die vorzugsweise mit der Primärwicklung (L1) magnetisch gekoppelt ist, wobei
der Erfassungskreis (30) ein Dämpfungsglied (DG) aufweist, das indirekt den Resonanzkreis bedämpft,
**dadurch gekennzeichnet, dass**
die Treiberschaltung (1) eine Steuereinheit (9) aufweist, die an einem Mittenpunkt eines Spannungsteilers (R_{ST}1, R_{ST}2) des Erfassungskreises (30) eine Messspannung (V_{fil1}) erfasst,
wobei die Steuereinheit (9) eine weitere Messspannung (V_{Sense}) erfasst und bezüglich wenigstens eines hinterlegten Schwellenwerts (SW1) diskriminiert und das Dämpfungsglied (DG) abhängig von der Diskriminierung aktiviert oder deaktiviert,
wobei die Steuereinheit (9) eine Mittenpunktspannung (Vₘₚ) an der getakteten Schaltung (21) erfasst und das Dämpfungsglied (DG) aktiviert, wenn die weitere erfasste Messspannung (V_{Sense}) den wenigstens einen hinterlegten Schwellenwert (SW1) unterschreitet, und
die Mittenpunktspannung (Vₘₚ) einem Hochpegel entspricht, insbesondere der Spannung (V_{dc}), wodurch erfasst wird, ob einer der mindestens zwei Schalter (LS, HS) geschlossen ist.

## Claims

1. A driver circuit (1) for lighting means, in particular for one or more LEDs, having:
- a circuit (21) which can be supplied with voltage (V_{dc}) and is clocked by means of at least two switches (LS, HS),
- a resonant circuit (22) supplied starting from the clocked circuit (21) having a transformer (20) for transferring a voltage from a primary winding (L1) of the transformer (20) to a secondary winding (L2) of the transformer (20),
wherein
connections (A) for the supply of the lighting means are supplied starting from the secondary winding (L2),
- wherein on the transformer (20) a detection circuit (30) is provided with a detection winding (LE), which is preferably magnetically coupled with the primary winding (L1), wherein
the detection circuit (30) has a damping element (DG), which is configured, to damp the resonant circuit (22) indirectly,
**characterized in**
**that** the driver circuit (1) has a control unit (9), which is configured, to detect a measuring voltage (V_{filI}) at a midpoint of a voltage divider (R_{ST}1, R_{ST}2) of the detection circuit (30),
wherein the control unit (9) detects a further measuring voltage (V_{Sense}) and discriminates with respect to at least one stored threshold value (SW1) and activates or deactivates the damping element (DG) depending on the discrimination,
wherein the control unit (9) detects a midpoint voltage (Vₘₚ) on the clocked circuit (21) and activates the damping element (DG), if the further detected measuring voltage (V_{Sense}) falls below the at least one stored threshold value (SW1), and the midpoint voltage (Vₘₚ) corresponds to a high level, in particular, to the voltage (V_{dc}), by means of which it is detected, whether one of the at least two switches (LS, HS) is closed.

2. The driver circuit (1) according to Claim 1 or 2,
wherein the damping element (DG) is designed as a series circuit of a damping capacitor (CD) and of a damping resistor (RD).

3. The driver circuit (1) according to any one of the preceding claims,
wherein the damping element (DG) has a switching element (SD), which is preferably connected in series to a second damping resistor (RD').

4. The driver circuit (1) according to any one of the preceding claims,
wherein the detection circuit (30) has a smoothing capacitor (CF), wherein the smoothing capacitor (CF) is connected in parallel to the detection winding (LE).

5. The driver circuit (1) according to Claim 5,
wherein the detection circuit (30) has a diode (DE),
wherein the diode (DE) is connected between the damping element (DG) and the smoothing capacitor (CF).

6. The driver circuit (1) according to Claim 3,
wherein the control unit (9) controls the switching element (SD) and activates or deactivates the damping element (DG) by means of the control of the switching element (SD).

7. The driver circuit (1) according to any one of the preceding claims,
wherein the damping element (DG) is connected in parallel to the detection winding (LE).

8. The driver circuit (1) according to any one of the preceding claims,
wherein the driver circuit (1) has at least one diode (D1/D2) between the secondary winding (L2) and the connections (A) for supplying the lighting means, which diode, in particular, rectifies a current output by the secondary winding (L2).

9. A method for the operation of a driver circuit (1) for lighting means, in particular, for one or more LEDs, wherein:
- a voltage (V_{dc}) supplies a circuit (21), which is clocked by means of at least two switches (LS, HS), and wherein starting from the clocked circuit (21) a resonant circuit (22) is supplied and the resonant circuit (22) has a transformer (20), which transformer (20) transfers a voltage from a primary winding (L1) of the transformer (20) to a secondary winding (L2) of the transformer (20), wherein connections (A) are supplied for supplying the lighting means starting from the secondary winding (L2),
- wherein on the transformer (20) a detection circuit (30) is provided with a detection winding (LE) which is preferably magnetically coupled with the primary winding (L1), wherein
the detection circuit (30) has a damping element (DG), which damps the resonant circuit indirectly,
**characterized in that**
the driver circuit (1) has a control unit (9), which detects a measuring voltage (V_{filI}) at a midpoint of a voltage divider (R_{ST}1, R_{ST}2) of the detection circuit (30),
wherein the control unit (9) detects a further measuring voltage (V_{Sense}) and discriminates with respect to at least one stored threshold value (SW1) and activates or deactivates the damping element (DG) depending on the discrimination,
wherein the control unit (9) detects a midpoint voltage (Vₘₚ) on the clocked circuit (21) and activates the damping element (DG), if the further detected measuring voltage (V_{Sense}) falls below the at least one stored threshold value (SW1), and the midpoint voltage (Vₘₚ) corresponds to a high level, in particular, to the voltage (V_{dc}), by means of which it is detected, whether one of the at least two switches (LS, HS) is closed.

## Revendications

1. Circuit pilote (1) pour moyens d'éclairage, plus particulièrement pour une ou plusieurs LED, comprenant :
- un circuit (21) pouvant être alimenté avec une tension (V_{dc}) et cadencé au moyen de deux commutateurs (LS, HS),
- un circuit de résonance (22) alimenté à partir du circuit cadencé (21), comprenant un transmetteur (20) pour la transmission d'une tension d'un enroulement primaire (L1) du transmetteur (20) vers un enroulement secondaire (L2) du transmetteur (20),
des bornes (A) pour l'alimentation des moyens d'éclairage étant alimentées à partir de l'enroulement secondaire (L2),
- moyennant quoi, sur le transmetteur (20), est prévu un circuit de détection (30) avec un enroulement de détection (LE), qui est couplé magnétiquement de préférence avec l'enroulement primaire (L1),
le circuit de détection (30) comprenant un organe d'amortissement (DG) qui est conçu pour amortir indirectement le circuit de résonance (22),
**caractérisé en ce que**
le circuit pilote (1) comprend une unité de commande (9) qui est conçue pour détecter, au niveau d'un point central d'un diviseur de tension (R_{ST}1, R_{ST}2) du circuit de détection (30), une tension de mesure (V_{fil1}),
l'unité de commande (9) détectant une autre tension de mesure (Vₛₑₙₛₑ) et discriminant en ce qui concerne au moins une valeur seuil (SW1) enregistrée et activant ou désactivant l'organe d'amortissement (DG) en fonction de la discrimination,
l'unité de commande (9) détectant une tension de point central (Vₘₚ) au niveau du circuit cadencé (21) et activant l'organe d'amortissement (DG) lorsque l'autre tension de mesure (Vₛₑₙₛₑ) détectée passe en dessous de l'au moins une valeur seuil (SW1) enregistrée et la tension de point central (Vₘₚ) correspond à un niveau haut, plus particulièrement de la tension (V_{dc}), ce ,qui permet de détecter si un des au moins deux commutateurs (LS, HS) est fermé.

2. Circuit pilote (1) selon la revendication 1 ou 2, l'organe d'amortissement (DG) étant conçu comme un branchement en série d'un condensateur d'amortissement (CD) et d'une résistance d'amortissement (RD).

3. Circuit pilote (1) selon l'une des revendications précédentes,
l'organe d'amortissement (DG) comprenant un élément de commutateur (SD) qui est relié de préférence en série avec une deuxième résistance d'amortissement (RD').

4. Circuit pilote (1) selon l'une des revendications précédentes,
le circuit de détection (30) comprenant un condensateur de lissage (CF), le condensateur de lissage (CF) étant branché parallèlement à l'enroulement de détection (LE).

5. Circuit pilote (1) selon la revendication 5,
le circuit de détection (30) comprenant une diode (DE), la diode (DE) étant branchée entre l'organe d'amortissement (DG) et le condensateur de lissage (CF).

6. Circuit pilote (1) selon la revendication 3,
l'unité de commande (9) contrôlant l'élément de commutateur (SD) et, grâce à la commande, l'élément de commutateur (SD) activant ou désactivant l'organe d'amortissement (DG).

7. Circuit pilote (1) selon l'une des revendications précédentes,
l'organe d'amortissement (DG) étant branché parallèlement à l'enroulement de détection (LE).

8. Circuit pilote (1) selon l'une des revendications précédentes,
le circuit pilote (1) comprenant, entre l'enroulement secondaire (L2) et les bornes (A) pour l'alimentation des moyens d'éclairage, au moins une diode (D1/D2), qui redresse plus particulièrement un courant généré par l'enroulement secondaire (L2).

9. Procédé de commande d'un circuit pilote (1) pour moyens d'éclairage, plus particulièrement pour une ou plusieurs LED, moyennant quoi :
- une tension (V_{dc}) alimente un circuit (21) cadencé au moyen d'au moins deux commutateurs (LS, HS) et un circuit de résonance (22) étant alimenté à partir du circuit cadencé (21) et le circuit de résonance (22) comprenant un transmetteur (20), le transmetteur (20) transmettant une tension d'un enroulement primaire (L1) du transmetteur (20) vers un enroulement secondaire (L2) du transmetteur (20), des bornes (A) pour l'alimentation des moyens d'éclairage étant alimentées à partir de l'enroulement secondaire (L2),
- sur le transmetteur (20), est prévu un circuit de détection (30) avec un enroulement de détection (LE), qui est couplé magnétiquement de préférence avec l'enroulement primaire (L1),
le circuit de détection (30) comprenant un organe d'amortissement (DG) qui amortit indirectement le circuit de résonance,
**caractérisé en ce que**
le circuit pilote (1) comprend une unité de commande (9) qui détecte, au niveau d'un point central d'un diviseur de tension (R_{ST}1, R_{ST}2) du circuit de détection (30), une tension de mesure (V_{fil1}),
l'unité de commande (9) détectant une autre tension de mesure (V_{Sense}) et discriminant en ce qui concerne au moins une valeur seuil (SW1) enregistrée et activant ou désactivant l'organe d'amortissement (DG) en fonction de la discrimination,
l'unité de commande (9) détectant une tension de point central (Vₘₚ) au niveau du circuit cadencé (21) et activant l'organe d'amortissement (DG) lorsque l'autre tension de mesure (V_{Sense}) détectée passe en dessous de l'au moins une valeur seuil (SW1) enregistrée et la tension de point central (Vₘₚ) correspond à un niveau haut, plus particulièrement à la tension (V_{dc}), ce qui permet de détecter si un des au moins deux commutateurs (LS, HS) est fermé.
